# EUROPÄISCHE PATENTSCHRIFT

(11) **EP 2 791 484 B1**
(45) Veröffentlichungstag und Bekanntmachung des Hinweises auf die Patenterteilung: **18.05.2016**
(21) Anmeldenummer: 12805515.9
(22) Anmeldetag: 10.12.2012
(51) Int. Cl.: F01N 3/20, F01N 3/36, F01N 3/38

(54) **VORRICHTUNG UND VERFAHREN ZUM VERDAMPFEN EINES FLUIDS IN EINEM ABGASSTRANG**
DEVICE AND METHOD FOR EVAPORATING A FLUID IN AN EXHAUST LINE
DISPOSITIF ET PROCÉDÉ POUR ÉVAPORER UN FLUIDE DANS UNE LIGNE D'ÉCHAPPEMENT

(30) Priorität: 14.12.2011 DE 102011088569
(43) Veröffentlichungstag der Anmeldung: 22.10.2014
(73) Patentinhaber: Robert Bosch GmbH, 70442 Stuttgart (DE)
(72) Erfinder: HAEBERER, Rainer, 75015 Bretten (DE); WELTING, Dirk, 71287 Weissach (DE)
(86) Internationale Anmeldenummer: PCT/EP2012/074948
(87) Internationale Veröffentlichungsnummer: WO 2013/087566

(56) Entgegenhaltungen:
- EP-A1- 2 388 451
- DE-A1-102008 001 212
- FR-A3- 2 929 328

## Beschreibung

Die Erfindung betrifft eine Vorrichtung und ein Verfahren zum Verdampfen eines Fluids in einem Abgasstrang eines Verbrennungsmotors.

### Stand der Technik

Bei Kraftwagen mit Verbrennungsmotor muss unter anderem aufgrund der Abgasgesetzgebung neben anderen Schadstoffen auch der Schadstoff NOₓ reduziert werden. Eine Methode, die dabei zur Anwendung kommt, ist das so genannte SCR-Verfahren, bei dem NOₓ mit Hilfe eines flüssigen, harnstoffhaltigen Reduktionsmittels ("AdBlue") in einem Katalysator zu N₂ und H₂O reduziert wird.

Um dabei einen guten Wirkungsgrad zu erreichen, sollte das flüssige Reduktionsmittel dem Abgas in möglichst kleinen Tröpfchen, d.h. mit einem guten Spray, zugegeben werden. Bei ausreichend hohen Temperaturen, insbesondere bei Temperaturen von mehr als 200 °C, verdampft das Reduktionsmittel und bildet Ammoniak, das sich im Katalysator einnistet und die im Abgas enthaltenen Stickoxide zu elementarem Stickstoff und Wasserdampf reduziert.

Ein Problem des SCR-Verfahrens ist das Auskristallisieren des Harnstoffs bei Temperaturen unter 200 °C. Aus diesem Grund wird das SCR-System häufig erst bei Temperaturen oberhalb von 200 °C aktiviert. Da im Prüfzyklus auch die "kalte Phase" unterhalb von 200 °C berücksichtigt wird, muss das SCR-System diesen Nachteil durch eine größere Umsatzrate bei höheren Betriebstemperaturen wettmachen, um im Mittel die vorgegebenen Abgaswerte nicht zu überschreiten.

Es ist daher wünschenswert, das beschriebene Kaltstartproblem zu lösen. Zur Lösung wurden u.a. Verdampfervorrichtungen vorgeschlagen, die im kalten Zustand aktiviert werden, um den Harnstoff zu verdampfen.

Die bisher bekannten Verdampfervorrichtungen umfassen üblicherweise einen beheizbaren Behälter, in dem das flüssige Reduktionsmittel gesammelt und durch Wärmezufuhr in Dampf bzw. Ammoniak umgewandelt wird. Alternativ kann das flüssige Reduktionsmittel auch in ein heißes Gefäß gesprüht werden, wobei es beim Auftreffen auf eine heiße Oberfläche in Dampf und Ammoniak umgewandelt wird. Die in der Verdampfervorrichtung erzeugten Gase werden dann durch geeignete Maßnahmen dem Abgas beigemischt.

DE 10 2005 063 081 A1 offenbart ein Einbauteil zur Montage in einem Abgasstrang einer Verbrennungskraftmaschine mit einem an beiden Stirnenden mit Verbindungsflanschen versehenen Rohrstück und einem auf der Außenseite des Rohrstücks montierten Dosiermodul zum Zudosieren eines Reduktionsmittel-Vorläufers in das Rohrstück. Zwischen dem Dosiermodul und dem stromabwärtigen Stirnende des Rohrstücks ist im Bewegungsweg des zudosierten Reduktionsmittel-Vorläufers ein Oberflächenverdampfer angeordnet.

EP 2 388 451 beschreibt eine Abgasreinigungsanlage mit einem elektrischen Heizer, FR 2929328 eine nachmotorische Kraftstoffeinspritzeinrichtung mit einer pulsweitenmodulierbaren Heizung.

### Offenbarung der Erfindung

Aufgabe der Erfindung ist es, eine einfach und kostengünstig zu realisierende Vorrichtung und ein zuverlässiges und kostengünstiges Verfahren zum Verdampfen eines flüssigen Reduktionsmittels in einem Abgasstrang vorzuschlagen.

Gemäß der vorliegenden Erfindung ist eine Verdampfervorrichtung aus einer Standard-Glühkerze, die wenigstens einen erhitzbaren Bereich hat, der in dem Abgasstrang angeordnet ist, und einem Standard-Einspritzventil aufgebaut. Das Einspritzventil und die Glühkerze sind dabei so ausgebildet und in Bezug zueinander angeordnet, dass das Reduktionsmittel von dem Einspritzventil wenigstens teilweise auf einen im Betrieb heißen Bereich der Glühkerze gespritzt wird.

Die hier vorgeschlagene Verdampfervorrichtung hat den Vorteil, dass sowohl die Wärmequelle (Glühkerze) als auch das Einspritzventil technisch ausgereift und in großer Stückzahl zu niedrigen Kosten verfügbar sind. Eine erfindungsgemäße Verdampfervorrichtung ist daher besonders zuverlässig und kann sehr kostengünstig realisiert werden.

Dabei ist um einen im Betrieb heißen Bereich der Glühkerze ein Fluidreservoir zur Aufnahme von aus dem Einspritzventil gespritztem Reduktionsmittel ausgebildet. Dadurch können auch größere Mengen flüssigen Reduktionsmittels über einen ausreichenden Zeitraum im Kontakt mit dem im Betrieb heißen Bereich der Glühkerze gehalten und verdampft werden.
In einer Ausführungsform weist die Glühkerze eine Längenausdehnung in Richtung einer Längsachse auf, und die Glühkerze und das Einspritzventil sind so angeordnet, dass das Reduktionsmittel im Betrieb in einem Winkel von 45° bis 135° in Bezug auf die Längsachse der Glühkerze eingespritzt wird. Dies ermöglicht es, das flüssige Reduktionsmittel besonders effektiv auf die Glühkerze zu spritzen.

In einer Ausführungsform ist das Fluidreservoir durch eine die Glühkerze wenigstens teilweise umgebende Hülse begrenzt. Eine die Glühkerze umgebende Hülse stellt ein einfach und kostengünstig herzustellendes und effektives Fluidreservoir zur Verfügung.

In einer Ausführungsform ist das Fluidreservoir als ein die Glühkerze wenigstens teilweise umgebendes (Metall-)Drahtgeflecht ausgebildet. Das eingespritzte flüssige Reduktionsmittel hat so die Möglichkeit, sich in dem heißen (Metall-)Drahtgeflecht zu verfangen und anzusammeln. Auf diese Weise können auch größere Mengen flüssigen Reduktionsmittels effektiv verdampft werden.

In einer Ausführungsform hat die Hülse ein oder mehrere Löcher. Durch die Löcher kann das flüssige Reduktionsmittel infolge der Kapillarwirkung in einen Raum, der zwischen der Glühkerze und der Hülse ausgebildet ist, eindringen und in unmittelbarer Nähe des im Betrieb heißen Bereichs der Glühkerze ein Flüssigkeitsreservoir bilden.

Vorteilhaft ist, wenn die Löcher der Hülse eine sich nach außen öffnende trichterförmige Gestalt haben und die Hülse an einer oder mehreren Stellen direkten Kontakt zum im Betrieb heißen Bereich der Glühkerze hat. Alternativ kann die Hülse auch auf der dem Einspritzventil zugewandten Seite teilweise geöffnet sein und auf der von dem Einspritzventil abgewandten Seite lediglich kleine Löcher aufweisen. In dieser Ausführungsform kann der Strahl des Reduktionsmittels noch besser durch den zuvor erwähnten Spalt in die Hülse eindringen und nach dem Verdampfen durch die Löcher aus der Hülse austreten. In einer Ausführungsform ist das Einspritzventil derart ausgebildet, dass es beim Einspritzen in einem ersten Zeitraum einen aufgerissenen Schnurstrahl, der auf die Glühkerze trifft, und in einem zweiten, späteren Zeitraum einen feinen, breiten Spray-Strahl ausgibt.

Das Strahlbild des Einspritzventils wird weitgehend durch den Einspritzdruck und die Einspritzmenge, die durch das Tastverhältnis bzw. die Taktfrequenz festgelegt wird, bestimmt. Es ist bekannt, dass Ventile mit einer Spritzlochplatte mit entsprechender Spritzlochgeometrie zu Beginn des Einspritzvorgangs zunächst einen an ihrer Oberfläche aufgerissenen Schnurstrahl ausgeben, der bei längerer Spritzdauer in einen breiten, feinen Spraystrahl übergeht. Dieser Effekt ist stark druckabhängig.

Diese Eigenschaft ermöglicht es, das Strahlbild im Verlauf des Einspritzvorgangs zu ändern und so durch die Wahl der Einspritzdauer den Anteil des direkt auf die Glühkerze aufgebrachten Reduktionsmittels zu beeinflussen. Insbesondere kann durch kurze Einspritzimpulse ein großer Teil des eingespritzten Reduktionsmittels auf die heiße Glühkerze aufgebrachten werden, wogegen bei langen Einspritzimpulsen nur ein im Verhältnis geringerer Anteil des eingespritzten Reduktionsmittels auf die Glühkerze trifft und durch diese verdampft wird, während der größere Anteil des in einem feinen Spraystrahl eingespritzten Reduktionsmittels den heißen Bereich der Glühkerze verfehlt.

In einer Ausführungsform wird das Reduktionsmittel bei niedrigen Abgastemperaturen in kurzen Impulsen und bei höheren Abgastemperaturen in länger andauernden Impulsen eingespritzt, so dass bei niedrigen Abgastemperaturen ein höherer Anteil des eingespritzten Reduktionsmittels auf die Glühkerze trifft und von ihr verdampft wird, wogegen bei höheren Abgastemperaturen, bei denen ein Verdampfen des Reduktionsmittels durch eine externe Wärmequelle nicht zwingend erforderlich ist, das Reduktionsmittel in einem feinen Spray in den Abgasstrang eingespritzt wird, um eine bessere Vermischung des Reduktionsmittels mit den Abgasen zu ermöglichen.

Insbesondere wird das Einspritzventil beim Kaltstart bei niedrigem Druck mit hoher Frequenz und kurzen Einspritzdauern aktiviert. Dadurch trifft in seiner Oberfläche aufgerissenes flüssiges Reduktionsmittel auf die Glühkerze. Da bei tiefen Temperaturen vom Motor nur wenig NOₓ produziert wird, ist nur wenig Reduktionsmittel erforderlich.

Wird, nachdem der Motor die Betriebstemperatur erreicht hat, in den Heißmodus umgeschaltet, so wird aufgrund der nun größeren NOₓ-Menge in den Abgasen durch erhöhten Einspritzdruck und/oder eine längere Einspritzdauer die Einspritzmenge des flüssigen Reduktionsmittels erhöht. Dies hat einen breitflächigen feinen Spraystrahl zur Folge. Der größte Teil des feinen, breit gefächerten Spraystrahls verfehlt die Glühkerze. Nur ein kleiner Anteil trifft auf die Glühkerze. Da die mittlerweile ausgeschaltete Glühkerze jedoch durch das nun heiße Abgas weiterhin stark erhitzt wird, verdampft das auf die Glühkerze auftreffende flüssige Reduktionsmittel sofort.

In einer Ausführungsform ist wenigstens ein Bereich des Abgasstrangs so ausgebildet, dass er wenigstens einen Teil des Abgasstromes in Richtung auf die Glühkerze ablenkt. Durch einen in Richtung der Glühkerze abgelenkten Abgasstrom wird eine besonders effektive Vermischung des Abgasstromes mit dem von der Glühkerze verdampften Reduktionsmittel erreicht.

Die Erfindung wird im Folgenden anhand der in den Figuren gezeigten Ausführungsbeispiele näher erläutert. Dabei zeigt:
Fig. 1 eine schematische Schnittansicht einer Vorrichtung zum Verdampfen eines flüssigen Reduktionsmittels in einem Abgasstrang;
Fig. 2 eine schematische Schnittansicht eines Ausführungsbeispiels einer erfindungsgemäßen Vorrichtung mit einer die Glühkerze umgebenden Hülse;
Fig. 3 eine schematische Schnittansicht eines weiteren Ausführungsbeispiels einer erfindungsgemäßen Vorrichtung mit einem die Glühkerze umgebenden Drahtgeflecht;
Fig. 4 eine schematische Schnittansicht einer Vorrichtung mit einer zusätzlichen Gaseinspritzdüse;
Fig. 5 eine schematische Schnittansicht einer Vorrichtung mit einer Ablenkvorrichtung zum Ablenken der Abgase im Abgasstrang;
Fig. 6 eine schematische Schnittansicht eines weiteren Ausführungsbeispiels einer erfindungsgemäßen Vorrichtung mit einem im Abgasstrang angeordneten Leitblech zum Ablenken des Abgasstromes; und
Fig. 7 eine Darstellung des Leitblechs aus der Fig. 6.

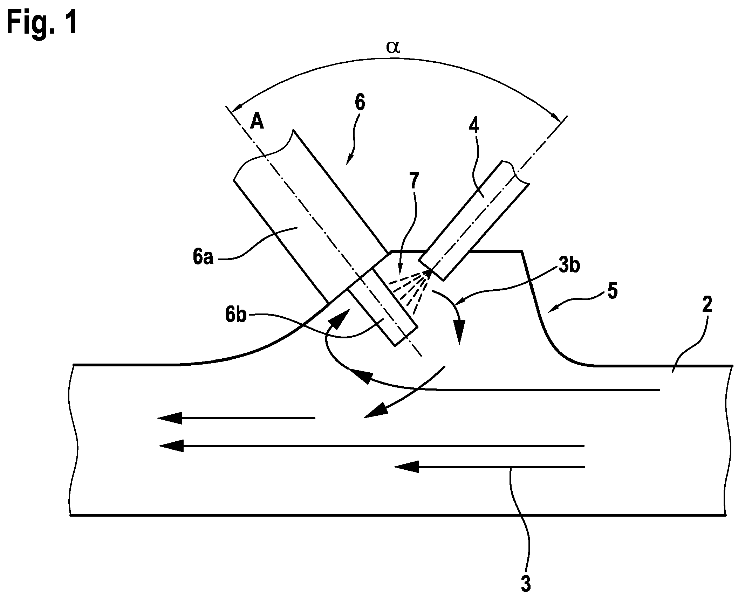

Fig. 1 zeigt eine schematische Schnittansicht einer Vorrichtung zum Verdampfen eines Reduktionsmittels in einem Abgasstrang 2, durch den in dem in der Fig. 1 gezeigten Beispiel von rechts nach links ein Abgasstrom 3 strömt.

An dem Abgasstrang 2 ist auf der in der Fig. 1 oben dargestellten Seite ein Flansch 5 ausgebildet, an dem eine Glühkerze 6 und ein Einspritzventil 4 angebracht sind.

Dem Einspritzventil 4 wird über eine in der Fig. 1 nicht gezeigte Fluidleitung das einzuspritzende flüssige Reduktionsmittel zugeführt, um dieses in den Abgasstrang 2 einzuspritzen.

Die Glühkerze 6 weist einen außerhalb des Abgasstrangs 2 angeordneten äußeren Bereich 6a und einen innerhalb des Abgasstrangs 2 angeordneten inneren, zylinderförmig ausgebildeten Bereich 6b auf. Die Glühkerze 6 ist derart ausgebildet, dass sich der innerhalb des Abgasstrangs 2 angeordnete innere Bereich 6b im Betrieb auf eine hohe Temperatur, die oberhalb der Verdampfungstemperatur des durch das Einspritzventil 4 eingespritzten flüssigen Reduktionsmittels liegt, erhitzt.

Das Einspritzventil 4 und die Glühkerze 6 sind dabei derart angeordnet, dass der Strahl 7 des in den Abgasstrang 2 eingespritzten flüssigen Reduktionsmittels auf den im Betrieb heißen inneren Bereich 6b der Glühkerze 6 trifft und dort verdampft. Insbesondere sind das Einspritzventil 4 und die Glühkerze 6 derart angeordnet, dass der Winkel α zwischen einer Längsachse A der Glühkerze 6 und dem Strahl 7 des eingespritzten Reduktionsmittels im Bereich von 45° bis 135° liegt.

Durch den am Abgasstrang 2 ausgebildeten Flansch 5 bildet sich im Bereich des Flansches 5 im Abgasstrang 2 eine Zirkularströmung 3b aus, die einen Teil der Abgase 3 um den im Betrieb heißen inneren Bereich 6b der Glühkerze 6 führt, so dass die Abgase 3 das von der Glühkerze 6 verdampfte Reduktionsmittel aufnehmen und dem Hauptabgasstrom 3 beimischen.

Die in der Fig. 1 gezeigte Vorrichtung ermöglicht auch bei niedrigen Temperaturen der Abgase 3 eine effektive Beimischung gasförmigen Reduktionsmittels zu den durch den Abgasstrang 2 strömenden Abgasen 3.

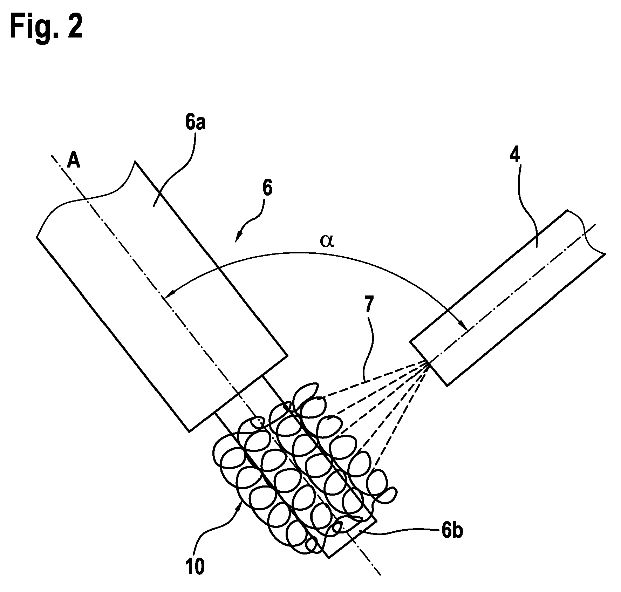

Fig. 2 zeigt in einer schematischen Ansicht ein Ausführungsbeispiel einer erfindungsgemäßen Vorrichtung. Aus Gründen der Übersichtlichkeit wurde dabei auf die Darstellung des Abgasstrangs 2 verzichtet und die Darstellung beschränkt sich auf die Darstellung der Glühkerze 6 und des Einspritzventils 4.

In dem in der Fig. 2 gezeigten Ausführungsbeispiel ist der innere, im Betrieb heiße Bereich 6b der Glühkerze 6 von einem (Metall-)Drahtgeflecht 10 umgeben und das flüssige Reduktionsmittel wird während des Einspritzvorgangs von dem Einspritzventil 4 wenigstens teilweise auf das Drahtgeflecht 10 gesprüht.

Ein Teil des eingespritzten Reduktionsmittels verfängt sich in dem Drahtgeflecht 10, sammelt sich dort an und verdampft allmählich. Das in der Fig. 2 gezeigte Ausführungsbeispiel ermöglicht es, auch größere Mengen flüssigen Reduktionsmittels, die nicht vollständig verdampfen würden, wenn sie wie in dem in der Fig. 1 gezeigten ersten Ausführungsbeispiel direkt auf den heißen Bereich 6b der Glühkerze 6 gesprüht werden würden, vollständig zu verdampfen.

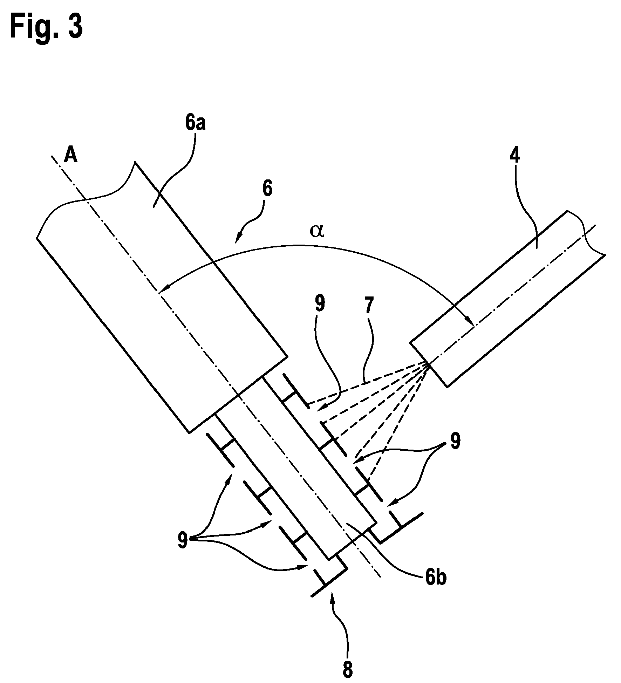

Fig. 3 zeigt ein alternatives Ausführungsbeispiel, das ebenfalls das vollständige Verdampfen größerer Mengen flüssigen Reduktionsmittels ermöglicht.

Anstelle des in der Fig. 2 gezeigten Drahtgeflechts 10 ist der innerhalb des Abgasstrangs 2 angeordnete, im Betrieb heiße Bereich 6b der Glühkerze 6 von einer Hülse 8 umgeben, die eine perforierte Wand aufweist. Der radiale Abstand zwischen der Wand der Hülse 8 und dem äußeren Umfangs des inneren, im Betrieb heißen Bereichs 6b der Glühkerze 6 beträgt dabei vorzugsweise weniger als 0,5 mm, insbesondere weniger als 0,4 mm. In der Wand der Hülse 8 sind mehrere Löcher 9 ausgebildet, die es ermöglichen, dass das von dem Einspritzventil 4 in den Abgasstrang 2 eingespritzte flüssige Reduktionsmittel 7 in den Raum, der zwischen der Hülse 8 und dem im Betrieb heißen inneren Bereich 6b der Glühkerze 6 ausgebildet ist, eindringt und dort ein Flüssigkeitsreservoir bildet. Aufgrund der hohen Temperatur des inneren Bereichs 6b der Glühkerze 6 verdampft das in dem Flüssigkeitsreservoir angesammelte flüssige Reduktionsmittel 7 nach und nach.

Dabei ist es vorteilhaft, wenn die Löcher 9 in der Wand der Hülse 8 eine sich nach außen öffnende trichterförmige Gestalt haben. Ebenso ist es vorteilhaft, wenn die Hülse 8 an einigen Stellen in direktem Kontakt mit dem heißen Bereich 6b der Glühkerze 6 steht, so dass auch die Hülse 8 auf eine hohe Temperatur erhitzt wird.

In einem alternativen, in den Figuren nicht gezeigten Ausführungsbeispiel kann die Hülse 8 auch auf der dem Einspritzventil 4 zugewandten Seite teilweise geöffnet sein, wobei sie auf der vom Einspritzventil 4 abgewandten Seite lediglich kleine Löcher aufweist, so dass der Strahl 7 des flüssigen Reduktionsmittels durch den dem Einspritzventil 4 zugewandten Spalt in den Raum zwischen der Hülse 8 und der Glühkerze 6 eindringt und das verdampfte Reduktionsmittel durch die auf der von dem Einspritzventil 4 abgewandten Seite der Hülse 8 ausgebildeten Löcher 9 aus der Hülse 8 in den Abgasstrang 2 austritt. Dies ermöglicht ein besonders effektives Verdampfen des in den Abgasstrang 2 eingespritzten flüssigen Reduktionsmittels.

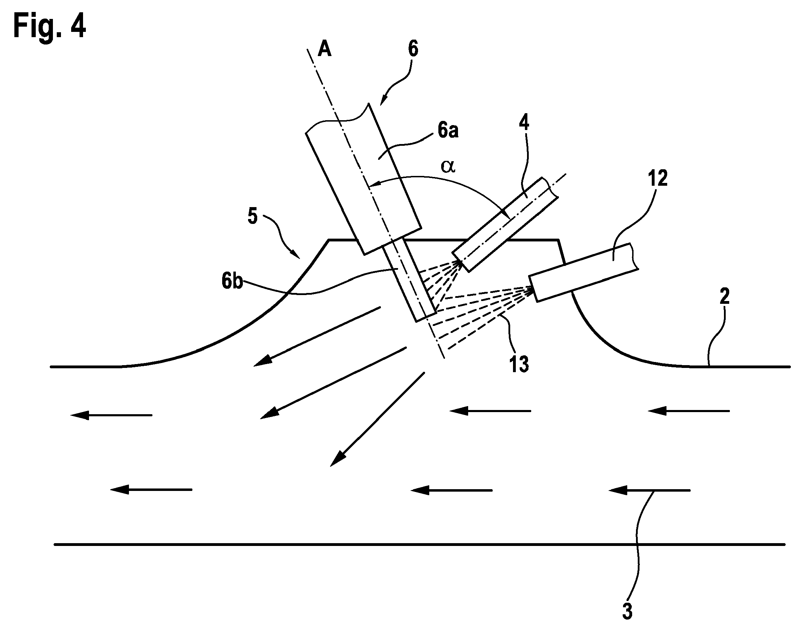

Fig. 4 zeigt eine schematische Schnittansicht einer Anordnung, bei der eine zusätzliche Düse 12 an dem Flansch 5 angebracht ist. Die zusätzliche Düse 12 ist ausgebildet, um im Betrieb einen zusätzlichen Gasstrom 13 über den inneren, im Betrieb heißen Bereich 6b der Glühkerze 6 zu führen und so eine noch bessere Vermischung des am heißen Bereich 6b der Glühkerze 6 verdampften Reduktionsmittels mit den Abgasen 3, die durch den Abgasstrang 2 strömen, zu bewirken. Der aus der Düse 12 austretende Gasstrom 13 kann aus dem Abgasstrang 2 abgezweigte Abgase 3 oder von außen aus der Umgebung zugeführte Luft enthalten.

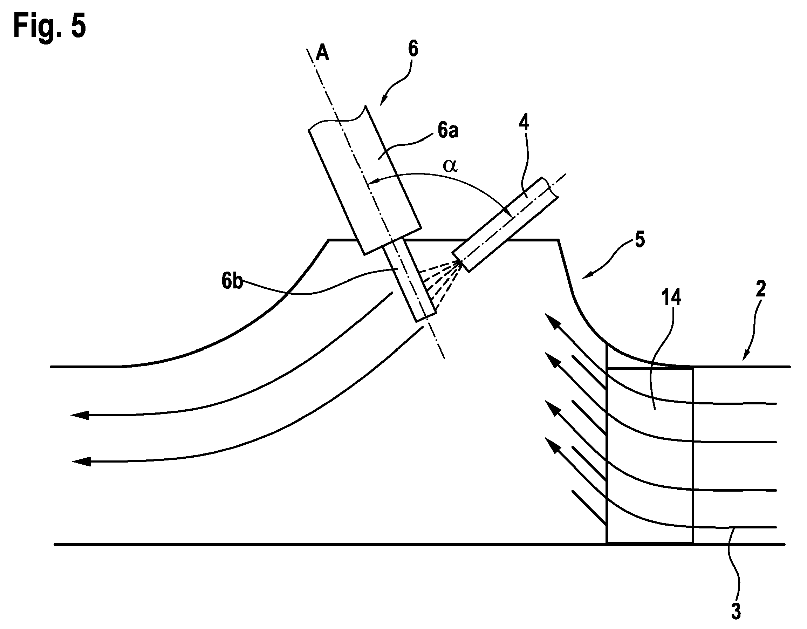

Fig. 5 zeigt eine Vorrichtung, bei der im Abgasstrang 2 stromaufwärts des Flansches 5 eine Ablenkvorrichtung (Mischer) 14 angeordnet ist. Die Ablenkvorrichtung 14 ist so ausgebildet, dass sie den Abgasstrom 3 im Abgasstrang 2 in Richtung auf den im Betrieb heißen Bereiches 6b der Glühkerze 6 ablenkt. Dies bewirkt eine noch effektivere

Vermischung des am heißen Bereich 6b der Glühkerze 6 verdampften Reduktionsmittels mit den Abgasen 3 im Abgasstrang 2.

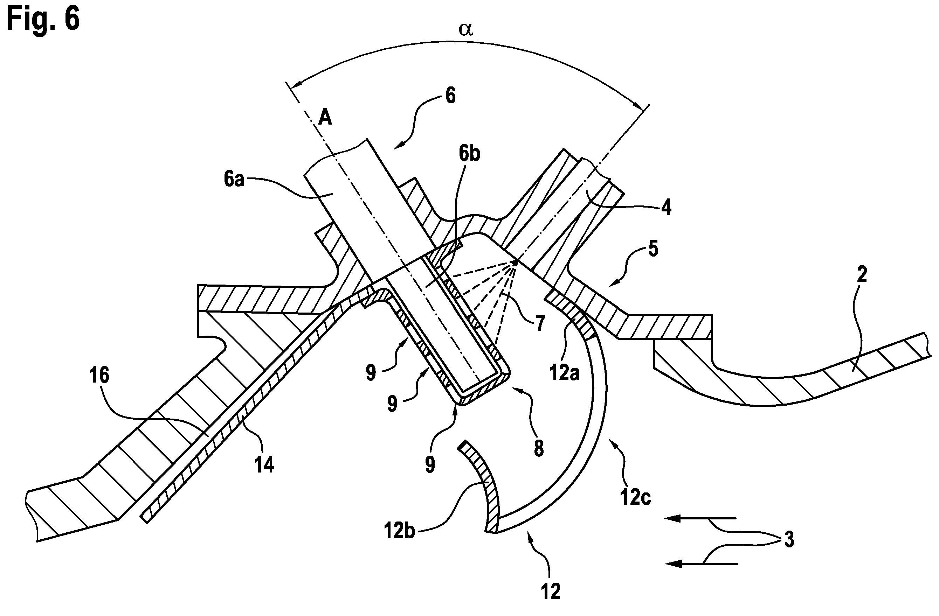

Fig. 6 zeigt eine schematische Schnittansicht eines weiteren Ausführungsbeispiels, bei dem der innere, im Betrieb heiße Bereich 6b der Glühkerze 6 von einer radialen Hülse 8 umgeben ist, wie sie im Zusammenhang mit der Fig. 3 beschrieben worden ist.

Zusätzlich weist das in der Fig. 6 gezeigte Ausführungsbeispiel ein Leitblech 12 auf, das so ausgebildet und im Abgasstrang 2 angeordnet ist, dass es die durch den Abgasstrang 2 strömende Abgasströmung 3 aufnimmt und sie der Kontinuitätsgleichung entsprechend in Richtung auf die Glühkerze 6 ablenkt und beschleunigt.

Insbesondere weist das Leitblech 12 einen oberen, an dem Flansch 5 befestigten Befestigungsbereich 12a und einen unteren, in einem Abstand von dem oberen Befestigungsbereich 12a angeordneten Leitbereich 12b auf. Zwischen dem Befestigungsbereich 12a und dem Leitbereich 12b ist eine Leitöffnung 12c ausgebildet, die im Zusammenwirken mit dem unteren Leitbereich 12b die gewünschte und zuvor beschriebene Ablenkung und Beschleunigung des Abgasstromes 3 in Richtung auf die Glühkerze 6 bewirkt.

Dem Leitblech 12 gegenüberliegend ist auf der vom Einspritzventil 4 abgewandten Seite der Glühkerze 6 ein Verdampfungsblech 14 derart angebracht, dass es einen thermisch isolierenden Abstand vom Abgasstrang 2 hat. Durch den heißen Abgasstrom 3 wird das Verdampfungsblech 14 im Betrieb auf eine hohe Temperatur erhitzt. Das heiße Verdampfungsblech 14 unterstützt das Verdampfen des flüssigen Reduktionsmittels und verhindert eine Kristallbildung bei tiefen Abgastemperaturen.

Die in der Fig. 6 gezeigte Konfiguration ähnelt der Vorkammer bzw. Wirbelkammer von Dieselmotoren mit indirekter Einspritzung. Die Verdampfungszelle entspricht dabei der Vorkammer. Die Wände der Verdampfungszelle müssen stets eine sehr hohe Temperatur haben, um das Ausbilden von Ammoniakkristallen zu verhindern. Dies wird durch eine Kombination aus dem Verdampfungsblech 14 und dem Leitblech 12, die von dem relativ kalten Abgasstrang 2 durch einen Luftspalt thermisch isoliert sind, realisiert.

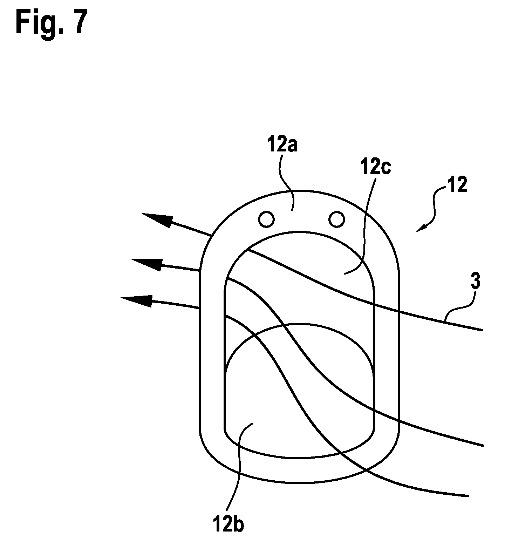

Fig. 7 zeigt eine schematische Frontansicht des Leitbleches 12. In dieser Frontansicht sind der untere Leitbereich 12b und die darüber ausgebildete Leitöffnung 12c, durch die der Abgasstrom 3 strömt und abgelenkt wird, besonders gut zu erkennen.

In einem vorteilhaften Ausführungsbeispiel ist die Einspritzvorrichtung einschließlich der Glühkerze 6 und des Einspritzventils 4 als Einheit in einem Adapter untergebracht, der einstückig an dem Abgasstrang 2 montiert wird. Dies vereinfacht die Montage und Logistik einer erfindungsgemäßen Vorrichtung. Die in der Fig. 3 gezeigte Hülse 8 kann ebenfalls Bestandteil des Adapters sein, so dass die Glühkerze 6 mit ihrem unteren, im Betrieb heißen Bereich 6b bei der Montage einfach in die Hülse 8 eingeschoben wird. Durch einen derartigen Adapter wird die Montage einer erfindungsgemäßen Einspritzvorrichtung am Abgasstrang 2 erheblich vereinfacht.

## Patentansprüche

1. Vorrichtung zum Verdampfen eines Fluids (7) in einem Abgasstrang (2) eines Verbrennungsmotors, wobei die Vorrichtung ein Einspritzventil (4) aufweist, das zum Einspritzen des Fluids (7) in den Abgasstrang (2) ausgebildet ist, wobei die Vorrichtung eine Glühkerze (6) mit wenigstens einem erhitzbaren Bereich (6b) aufweist, der innerhalb des Abgasstrangs (2) angeordnet ist, und das Einspritzventil (4) und die Glühkerze (6) derart ausgebildet und angeordnet sind, dass das von dem Einspritzventil (4) in den Abgasstrang (2) eingespritzte Fluid (7) wenigstens teilweise auf den wenigstens einen erhitzbaren Bereich (6b) der Glühkerze (6) trifft, **dadurch gekennzeichnet, dass** um den wenigstens einen erhitzbaren Bereich (6b) der Glühkerze (6) ein Fluidreservoir vorgesehen ist, das zur Aufnahme von Fluid ausgebildet ist, das von dem Einspritzventil (4) in den Abgasstrang (2) eingespritzt worden ist.

2. Vorrichtung nach Anspruch 1, wobei das Fluidreservoir in Form eines die Glühkerze (6) wenigstens teilweise umgebenden Metalldrahtgeflechtes (10) ausgebildet ist.

3. Vorrichtung nach Anspruch 1, wobei das Fluidreservoir in Form einer die Glühkerze (6) wenigstens teilweise umgebenden Hülse (8) ausgebildet ist.

4. Vorrichtung nach Anspruch 3, wobei die Hülse (8) ein oder mehrere sich nach außen öffnende, insbesondere trichterförmig ausgebildete, Löcher (9) aufweist.

5. Vorrichtung nach einem der vorangehenden Ansprüche, wobei das Einspritzventil (4) derart ausgebildet ist, dass es in einem ersten Zeitraum einen konzentrierten Schnurstrahl, und in einem zweiten auf den ersten Zeitraum folgenden Zeitraum des Einspritzvorgangs einen Spraystrahl ausgibt.

6. Vorrichtung nach einem der vorangehenden Ansprüche, wobei ein Bereich des Abgasstrangs (2) so ausgebildet ist, dass er wenigstens einen Teil des Abgasstromes (3) in Richtung auf die Glühkerze (6) ablenkt.

7. Verfahren zum Verdampfen eines Fluids in einem Abgasstrang (2), **dadurch gekennzeichnet, dass** das zu verdampfende Fluid (7) wenigstens teilweise auf einen heißen Bereich einer Glühkerze (6), der in dem Abgasstrang (2) angeordnet ist, gespritzt wird, wobei um den heißen Bereich der Glühkerze (6) ein Fluidreservoir vorgesehen ist, das zur Aufnahme von Fluid ausgebildet ist, das in den Abgasstrang (2) gespritzt wird.

8. Verfahren nach Anspruch 7, wobei das Fluid (7) bei niedrigen Abgastemperaturen in kurzen Impulsen und bei höheren Abgastemperaturen in länger andauernden Impulsen eingespritzt wird.

9. Verfahren nach Anspruch 7 oder 8, wobei wenigstens ein Teil eines durch den Abgasstrang (2) strömenden Abgasstromes (3) in Richtung auf die Glühkerze (6) abgelenkt wird.

## Claims

1. Device for evaporating a fluid (7) in an exhaust tract (2) of an internal combustion engine, wherein the device has an injection valve (4) which is designed for injecting the fluid (7) into the exhaust tract (2), wherein the device has a glow plug (6) with at least one heatable region (6b) which is arranged within the exhaust tract (2) , and the injection valve (4) and the glow plug (6) are designed and arranged such that the fluid (7) injected into the exhaust tract (2) by the injection valve (4) at least partially strikes the at least one heatable region (6b) of the glow plug (6), **characterized in that**, around the at least one heatable region (6b) of the glow plug (6), there is provided a fluid reservoir which is designed for receiving fluid that has been injected into the exhaust tract (2) by the injection valve (4).

2. Device according to Claim 1, wherein the fluid reservoir is in the form of a metal wire mesh (10) at least partially surrounding the glow plug (6).

3. Device according to Claim 1, wherein the fluid reservoir is in the form of a sleeve (8) at least partially surrounding the glow plug (6).

4. Device according to Claim 3, wherein the sleeve (8) has one or more outwardly opening, in particular funnel-shaped holes (9).

5. Device according to one of the preceding claims, wherein the injection valve (4) is designed such that, in a first time period, it outputs a concentrated, linear jet, and in a second time period, which follows the first time period, of the injection process, it outputs a spray jet.

6. Device according to one of the preceding claims, wherein a region of the exhaust tract (2) is designed so as to divert at least a part of the exhaust-gas flow (3) in the direction of the glow plug (6).

7. Method for evaporating a fluid in an exhaust tract (2), **characterized in that** the fluid (7) for evaporation is sprayed at least partially onto a hot region of a glow plug (6) which is arranged in the exhaust tract (2), wherein, around the hot region of the glow plug (6), there is provided a fluid reservoir which is designed for receiving fluid that has been injected into the exhaust tract (2).

8. Method according to Claim 7, wherein the fluid (7) is injected in short pulses in the presence of low exhaust-gas temperatures and is injected in pulses of longer duration in the presence of relatively high exhaust gas temperatures.

9. Method according to Claim 7 or 8, wherein at least a part of an exhaust-gas flow (3) passing through the exhaust tract (2) is diverted in the direction of the glow plug (6).

## Revendications

1. Dispositif pour évaporer un fluide (7) dans une ligne d'échappement (2) d'un moteur à combustion interne, le dispositif présentant une soupape d'injection (4) qui est réalisée pour injecter le fluide (7) dans la ligne d'échappement (2), le dispositif présentant une bougie à incandescence (6) avec au moins une zone pouvant être chauffée (6b) qui est disposée à l'intérieur de la ligne d'échappement (2), et la soupape d'injection (4) et la bougie à incandescence (6) étant réalisées et disposées de telle sorte que le fluide (7) injecté par la soupape d'injection (4) dans la ligne d'échappement (2) parvienne au moins en partie sur l'au moins une zone pouvant être chauffée (6b) de la bougie à incandescence (6), **caractérisé en ce qu'**un réservoir de fluide est prévu autour de l'au moins une zone pouvant être chauffée (6b) de la bougie à incandescence (6), lequel est réalisé pour recevoir du fluide qui a été injecté par la soupape d'injection (4) dans la ligne d'échappement (2).

2. Dispositif selon la revendication 1, dans lequel le réservoir de fluide est réalisé sous la forme d'un treillis en fil métallique (10) entourant au moins en partie la bougie à incandescence (6).

3. Dispositif selon la revendication 1, dans lequel le réservoir de fluide est réalisé sous la forme d'une douille (8) entourant au moins en partie la bougie à incandescence (6).

4. Dispositif selon la revendication 3, dans lequel la douille (8) présente un ou plusieurs trous (9) s'ouvrant vers l'extérieur, en particulier réalisés en forme d'entonnoir.

5. Dispositif selon l'une quelconque des revendications précédentes, dans lequel la soupape d'injection (4) est réalisée de telle sorte qu'elle injecte, dans un premier intervalle de temps, un jet en faisceau concentré, et dans un deuxième intervalle de temps suivant le premier intervalle de temps de l'opération d'injection, un jet sous forme de spray.

6. Dispositif selon l'une quelconque des revendications précédentes, dans lequel une région de la ligne d'échappement (2) est réalisée de telle sorte qu'elle dévie au moins une partie du courant de gaz d'échappement (3) dans la direction de la bougie à incandescence (6).

7. Procédé d'évaporation d'un fluide dans une ligne d'échappement (2), **caractérisé en ce que** le fluide à évaporer (7) est injecté au moins en partie sur une zone chaude d'une bougie à incandescence (6) qui est disposée dans la ligne d'échappement (2), un réservoir de fluide étant prévu autour de la zone chaude de la bougie à incandescence (6), lequel est réalisé pour recevoir du fluide qui est injecté dans la ligne d'échappement (2).

8. Procédé selon la revendication 7, dans lequel le fluide (7) est injecté, dans le cas de faibles températures de gaz d'échappement, par courtes impulsions et dans le cas de hautes températures de gaz d'échappement, par impulsions de plus longue durée.

9. Procédé selon la revendication 7 ou 8, dans lequel au moins une partie d'un flux de gaz d'échappement (3) s'écoulant à travers la ligne d'échappement (2) est déviée dans la direction de la bougie à incandescence (6).
